# EUROPÄISCHE PATENTSCHRIFT

(11) **EP 1 442 915 B1**
(45) Veröffentlichungstag und Bekanntmachung des Hinweises auf die Patenterteilung: **20.01.2010**
(21) Anmeldenummer: 03022440.6
(22) Anmeldetag: 07.10.2003
(51) Int. Cl.: B60K 31/00

(54) **Geschwindigkeitsregler mit mehreren Betriebsmodi**
Cruise control system with different operating modes
Régulateur de vitesse avec plusieurs modes de fonctionnement

(30) Priorität: 30.01.2003 DE 10303611
(43) Veröffentlichungstag der Anmeldung: 04.08.2004
(73) Patentinhaber: ROBERT BOSCH GMBH, 70442 Stuttgart (DE)
(72) Erfinder: Michi, Harald, 75248 Oelbronn-Duern (DE); Scherl, Michael, 71679 Asperg (DE); Weilkes, Michael, 74343 Sachsenheim (DE); Uhler, Werner, 76646 Bruchsal (DE)

(56) Entgegenhaltungen:
- EP-A2- 1 065 087
- EP-A2- 1 065 090
- DE-A1- 19 958 520

## Beschreibung

### Stand der Technik

Die Erfindung betrifft einen Geschwindigkeitsregler für Kraftfahrzeuge nach Gattung des Hauptanspruchs. Aus DE 199 58 520 A1 ist ein Beispiel eines Geschwindigkeitsreglers dieser Gattung bekannt, der einerseits in einem sogenannten ACC-Modus (Adaptive Cruise Control) und andererseits in einem sogenannten Stop & Go Modus betreibbar ist.

Im ACC-Modus wird die Geschwindigkeit des Fahrzeugs auf eine vom Fahrer gewählte Wunschgeschwindigkeit geregelt, sofern die Fahrbahn vor dem eigenen Fahrzeug frei ist. Ein Abstandssensor, beispielsweise ein Radarsensor, gestattet es, vorausfahrende Fahrzeuge auf der eigenen Fahrspur und sonstige Hindernisse zu erkennen und die Geschwindigkeit erforderlichenfalls so anzupassen, daß das unmittelbar voraus fahrende Fahrzeug in einem angemessenen Sicherheitsabstand verfolgt wird. Der ACC-Modus ist generell für Fahrten auf Autobahnen oder gut ausgebauten Landstraßen bei flüssigem Verkehr vorgesehen, also für Verkehrssituationen, die durch eine relativ geringe Dynamik und relativ große Fahrzeugabstände gekennzeichnet sind. Unter diesen Bedingungen genügt zur Erfassung des Verkehrsumfelds ein langreichweitiges Ortungsradar mit vergleichsweise geringer Tiefenauflösung. Anhand des Dopplereffektes ist die Relativgeschwindigkeit der georteten Objekte direkt meßbar. Um häufige Fehlreaktionen des Systems zu vermeiden, werden generell nur bewegte Radarobjekte als relevante Zielobjekte berücksichtigt, da im allgemeinen nicht zu erwarten ist, daß sich stehende Hindernisse auf der Fahrbahn befinden. In Verkehrssituationen mit höherer Dynamik, etwa bei zähflüssigem Verkehr oder Stop & Go Verkehr oder auch im Stadtverkehr sollten dagegen auch Standziele in die Auswertung mit einbezogen werden. Außerdem ist hier wegen der generell kürzeren Fahrzeugabstände auch eine detailliertere Erfassung und Bewertung der Verkehrssituation wünschenswert. Der ACC-Modus ist für diese Verkehrssituationen ungeeignet und läßt sich deshalb nur dann aktivieren, wenn die Geschwindigkeit des eigenen Fahrzeugs oberhalb einer bestimmten Grenzgeschwindigkeit liegt, beispielsweise oberhalb von 30 km/h.

Der Stop & Go Modus ist dagegen für den unteren Geschwindigkeitsbereich vorgesehen und bietet Funktionen, die im ACC-Modus nicht verfügbar sind, insbesondere die Funktion einer automatischen Abbremsung des eigenen Fahrzeugs in den Stand, etwa beim Auffahren auf ein Stauende. Unter bestimmten Bedingungen ist dann auch ein automatisches Wiederanfahren möglich, wenn sich auch das vorausfahrende Fahrzeug wieder in Bewegung setzt. Diese Bedingungen sind beispielsweise erfüllt, wenn das eigene Fahrzeug nur relativ kurz gestanden hat und wenn das bisher verfolgte Zielobjekt, also das voraus fahrende Fahrzeug, ständig im Ortungsbereich des Abstandssensors geblieben ist. Unter anderen Bedingungen kann es dagegen zweckmäßig sein, das System ganz zu deaktiveren oder beim Anfahren des voraus fahrenden Fahrzeugs lediglich eine Anfahraufforderung an den Fahrer auszugeben und ihm selbst die letzte Entscheidung zu überlassen. Für die erweiterte Funktionalität im Stop & Go Modus ist nicht nur eine Erfassung von Standzielen erforderlich, sondern generell auch eine zusätzliche Nahbereichssensorik wünschenswert, beispielsweise in der Form eines Videosystems mit elektronischer Bildauswertung, eines Nahbereichsradars oder eines lichtoptischen Abstandssensors für den Nahbereich einschließlich der linken und rechten Fahrbahnränder, so daß auch plötzlich auftretende Hindernisse frühzeitig erkannt werden können. Diese komplexere Erfassung und Bewertung des Verkehrsumfelds, die für den Stop & Go Modus erforderlich oder zumindest wünschenswert ist, könnte jedoch bei höheren Geschwindigkeiten zu Fehlreaktionen oder zu einer Überlastung des Systems führen. Aus diesem Grund ist der Stop & Go Modus nur bei Geschwindigkeiten bis zu einer oberen Grenzgeschwindigkeit aktivierbar, beispielsweise bis zu 40 km/h.

In der Überlappungszone zwischen den Geschwindigkeitsbereichen für ACC und Stop & Co, im angenommenen Beispiel also zwischen 30 und 40 km/h, sind beide Modi aktivierbar, und die Wahl des Modus bleibt dem Fahrer überlassen. Zur Wahl des Betriebsmodus sind bei dem bekannten System spezielle Moduswähltasten vorgesehen, mit denen der Fahrer entweder den ACC-Modus oder den Stop & Go Modus aktivieren kann. Die aktive Beteiligung des Fahrers bei der Wahl des Betriebsmodus wird als sinnvoll angesehen, weil dem Fahrer auf diese Weise bewußt gemacht wird, in welchem Modus sich das System gerade befindet und welche Funktionen des Geschwindigkeitsreglers zur Verfügung stehen. So wird insbesondere verhindert, daß der Fahrer, wenn das vorausfahrende Fahrzeug plötzlich anhält, irrtümlich annimmt, der Geschwindigkeitsregler befinde sich im Stop & Go Modus, und sich darauf verläßt, daß der Geschwindigkeitsregler das Fahrzeug automatisch in den Stand bremst. Von manchen Fahrern wird jedoch die Notwendigkeit, den Betriebsmodus selbst zu wählen, als Beeinträchtigung des Bedienkomforts empfunden, und die zu diesem Zweck benötigten Befehlstasten machen das Bediensystem unübersichtlicher und erläuterungsbedürftiger.

### Vorteile der Erfindung

Der erfindungsgemäße Geschwindigkeitsregler mit den kennzeichnenden Merkmalen des Anspruchs 1 bietet demgegenüber bei gebührender Berücksichtigung der Sicherheitsaspekte den Vorteil eines höheren Bedienkomforts und einer größeren Übersichtlichkeit und Plausibilität des Bediensystems.

Der erfindungsgemäße Geschwindigkeitsregler ist in der Lage, Befehle, mit denen der Fahrer die Wunschgeschwindigkeit erhöht und verringert, zugleich als Befehle zum Wechsel des Betriebsmodus zu interpretieren, sofern auch die übrigen Bedingungen hierfür gegeben sind. Somit können spezielle Befehlstasten für die Wahl des Betriebsmodus entfallen. Dennoch bleibt der Fahrer über die Eingabe der Wunschgeschwindigkeit an der Moduswahl beteiligt, so daß die Transparenz des Systems für den Fahrer gewahrt bleibt. Ein Moduswechsel, der nicht mit einer Einschränkung, sondern vielmehr mit einer Erweiterung des Funktionsumfangs des Geschwindigkeitsreglers verbunden ist, erfordert keine erhöhte Aufmerksamkeit des Fahrers und kann deshalb auch automatisch, ohne aktive Beteiligung des Fahrers eingeleitet werden. Wenn dagegen der Moduswechsel dazu führt, daß eine sicherheitsrelevante Funktion, die bisher verfügbar war, nicht mehr verfügbar ist, so sollte dem Fahrer dies bewußt gemacht werden, damit er sich nicht irrtümlich auf die nicht mehr vorhandene Funktion verläßt. Wenn der Fahrer jedoch aktiv eine Wunschgeschwindigkeit wählt, die deutlich außerhalb des für den bisherigen Modus zugelassenen Geschwindigkeitsbereiches liegt, so wird sich der Fahrer darüber im Klaren sein, daß der bisherige Modus nicht aufrechterhalten werden kann, und deshalb kann allein die Wahl dieser Wunschgeschwindigkeit als Zeichen dafür gewertet werden, daß der Fahrer bewußt eine größere Verantwortung übernehmen will, so daß sich die Eingabe eines zusätzlichen Befehls zum Wechsel des Betriebsmodus erübrigt.

Mit den in den abhängigen Ansprüchen angegebenen Merkmalen werden vorteilhafte Weiterbildungen und Verbesserungen des im Hauptanspruch angegebenen Geschwindigkeitsreglers erreicht.

Zur Erhöhung der Transparenz ist es bevorzugt, wenn der Fahrer durch ein geeignetes Signal, beispielsweise ein optisches oder akustisches Signal, darauf hingewiesen wird, daß ein Moduswechsel stattgefunden hat und in welchem Modus sich der Geschwindigkeitsregler nun befindet.

In einer bevorzugten Ausführungsform weist der Geschwindigkeitsregler lediglich zwei Haupt-Betriebsmodi auf, nämlich den ACC-Modus und einen Modus, der hier als "Stop & Roll" bezeichnet wird. Der Begriff "Stop & Roll" bezieht sich auf einen Modus, der hinsichtlich der benötigten Sensorik und der Komplexität bei der Auswertung des Verkehrsumfelds zwischen dem ACC-Modus und dem eingangs erörterten Stop & Go Modus liegt. Im Stop & Roll Modus ist wie im Stop & Go Modus ein automatisches Abbremsen des Fahrzeugs in den Stand möglich, doch ist dieser Modus aufgrund der eingeschränkten Sensorik nicht für hochdynamische Verkehrssituationen gedacht, wie sie etwa im Stadtverkehr vorliegen.

Zur Vermeidung häufiger Moduswechsel ist es zweckmäßig, wenn die Umschaltung in Abhängigkeit von der vom Fahrer gewählten Wunschgeschwindigkeit mit einer gewissen Hysterese erfolgt. Dadurch läßt sich insbesondere erreichen, daß der Geschwindigkeitsregler im aktuellen Modus bleibt, wenn die gewählte Wunschgeschwindigkeit innerhalb des Überlappungsbereiches liegt, in dem beide Betriebsmodi erlaubt sind.

Da die Ist-Geschwindigkeit des Fahrzeugs nicht immer mit der vom Fahrer eingestellten Wunschgeschwindigkeit übereinstimmt, ist als Kriterium für die Entscheidung über einen Moduswechsel auch die Ist-Geschwindigkeit des Fahrzeugs heranzuziehen. Aus Transparenzgründen sollte hier als Ist-Geschwindigkeit diejenige Geschwindigkeit betrachtet werden, die dem Fahrer auch auf dem Tachometer angezeigt wird. Es ist vorteilhaft, wenn auch das Kriterium "Ist-Geschwindigkeit" flexibel gehandhabt wird, in dem Sinne, daß kurzfristige Unterschreitungen der Geschwindigkeit, bei der eigentlich die Umschaltung in den Stop & Roll Modus erfolgen sollte, mit Hilfe eines Zeitgebers toleriert werden. So hat der Fahrer die Möglichkeit, im Stop & Roll Betrieb schon vorausschauend eine höhere Wunschgeschwindigkeit einzugeben und damit implizit den Befehl zum Wechsel in den ACC-Modus zu geben, wenn er bemerkt, daß der Stau vor ihm sich auflöst. Normalerweise wird das Fahrzeug dann innerhalb kurzer Zeit auf eine Geschwindigkeit beschleunigen, in der der ACC-Betrieb zulässig ist. Nur wenn die Mindestgeschwindigkeit für ACC innerhalb einer Zeitspanne von beispielsweise 5 Sekunden nicht erreicht wird, etwa weil das voraus fahrende Fahrzeug zu langsam ist, fällt das System automatisch wieder in den Stop & Roll Modus zurück.

Wenn die eingestellte Wunschgeschwindigkeit über der Grenzgeschwindigkeit für ACC liegt, die Ist-Geschwindigkeit des Fahrzeugs aber verkehrsbedingt unter diesen Wert absinkt und für eine gewisse Zeit unterhalb dieses Wertes bleibt, erfolgt automatisch eine Umschaltung in den Stop & Roll Modus. In diesem Fall wird die Wunschgeschwindigkeit automatisch auf den größten für Stop & Roll zulässigen Wert begrenzt. Für die Rückkehr in den ACC-Modus ist dann folglich wieder eine Aktivität des Fahrers, nämlich die Eingabe einer höheren Wunschgeschwindigkeit erforderlich.

In beiden Haupt-Betriebsmodi ist wie bei herkömmlichen Geschwindigkeitsreglern dieser Art ein Übersteuern durch Betätigung des Gaspedals möglich. Die vom Fahrer über das Gaspedal eingegebene Beschleunigungsanforderung hat dann Vorrang gegenüber der kleineren, vom Geschwindigkeitsregler berechneten Sollbeschleunigung. Auch in diesen übersteuerten Zuständen ist ein Wechsel zwischen den beiden Haupt-Modi möglich, ein Wechsel von Stop & Roll zu ACC jedoch nur unter der Bedingung, daß der Fahrer aktiv die Wunschgeschwindigkeit erhöht. Andernfalls wird der Geschwindigkeitsregler inaktiviert, wenn die Ist-Geschwindigkeit einen Schwellenwert erreicht, bei dem die Funktionen des Stop & Roll Betriebs nicht mehr aufrechterhalten werden können.

Wenn der Geschwindigkeitsregler deaktiviert ist, kann er durch Eingabe einer Wunschgeschwindigkeit wieder aktiviert werden. Bevorzugt erfolgt dann die Entscheidung, ob der ACC Modus oder der Stop & Roll Modus aktiviert wird, in Abhängigkeit davon, ob die Ist-Geschwindigkeit oberhalb oder unterhalb der Grenzgeschwindigkeit für ACC liegt.

In einer speziellen Ausführungsform kann die Entscheidung über einen Moduswechsel und/oder über die Aktivierung oder Deaktivierung eines Betriebsmodus auch davon abhängig sein, daß bestimmte Bedingungen hinsichtlich der Erfassung des Verkehrsumfelds erfüllt sind, so daß eine noch höhere Betriebssicherheit erreicht wird.

### Zeichnung

Zwei Ausführungsbeispiele der Erfindung sind in den Zeichnungen dargestellt und in der nachfolgenden Beschreibung näher erläutert.

Es zeigen:
Figur 1 ein Blockdiagramm des Geschwindigkeitsreglers;
Figur 2 ein Diagramm der Geschwindigkeitsbereiche, in denen die verschiedenen Betriebsmodi des Geschwindigkeitsreglers aktivierbar sind; und
Figur 3 ein Diagramm zur Erläuterung der Übergänge zwischen verschiedenen Haupt-Betriebsmodi und Zuständen des Geschwindigkeitsreglers.

### Beschreibung der Ausführungsbeispiele

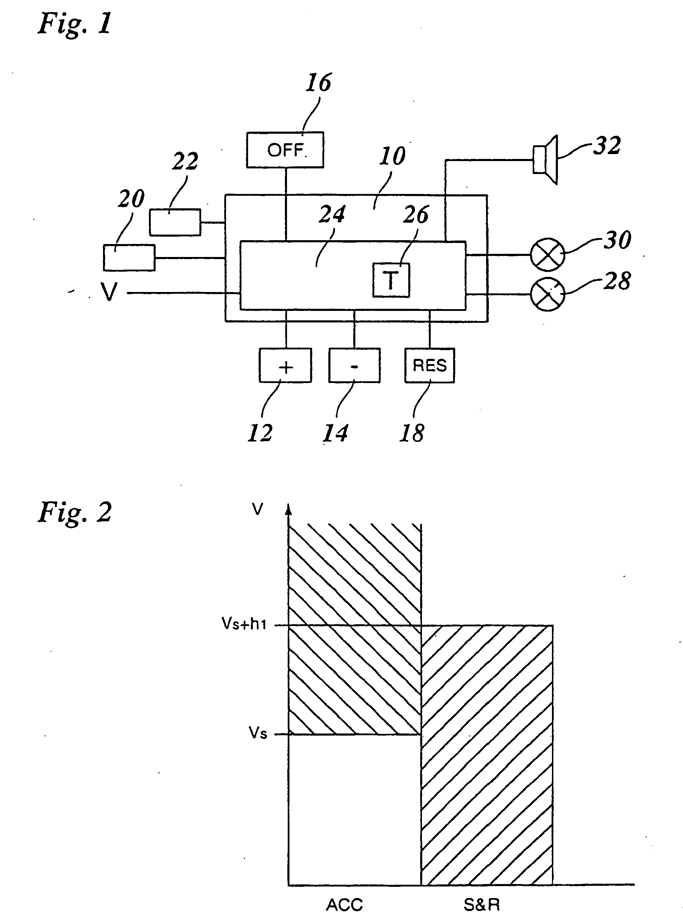

In Figur 1 ist als Blockdiagramm ein Geschwindigkeitsregler 10 dargestellt, mit dem in bekannter und hier nicht näher beschriebener Weise die Geschwindigkeit eines Kraftfahrzeugs auf eine vom Fahrer gewählte Wunschgeschwindigkeit geregelt wird. Zur Bedienung des Geschwindigkeitsreglers 10 ist üblicherweise am Lenkrad ein Multifunktionshebel vorgesehen, der die Funktionen von mehreren Funktionstasten erfüllt: einer "+"-Taste 12 zum Aktivieren des Reglers und zum Erhöhen der Wunschgeschwindigkeit Vₛₑₜ, beispielsweise in Schritten von 10 km/h, einer "-"-Taste 14 zum Aktivieren des Reglers und zum Verringern der Wunschgeschwindigkeit Vₛₑₜ, einer OFF-Taste 16 zum Deaktiveren des Reglers und einer Resume-Taste 18 zum erneuten Aktivieren des Reglers unter Übernahme der vor der letzten Deaktivierung geltenden Wunschgeschwindigkeit. Bei der ersten Aktivierung des Reglers mit Hilfe der "+"-Taste oder "-"-Taste wird als Wunschgeschwindigkeit Vₛₑₜ die auf den nächsten vollen Zehner auf- bzw. abgerundete Ist-Geschwindigkeit V des Fahrzeugs übernommen, wie sie auf dem Tachometer angezeigt wird. Wenn die Resume-Taste 18 gedrückt wird, ohne daß vorher eine Wunschgeschwindigkeit gespeichert war, so wird zur Bestimmung der Wunschgeschwindigkeit auf den vollen Zehner auf- oder abgerundet, der der Ist-Geschwindigkeit am nächsten liegt.

Der Geschwindigkeitsregler 10 nimmt Signale von einem Fernbereichs-Abstandssensor 20, beispielsweise einem Fernbereichsradar, und von einer Nahbereichssensorik 22 auf, die beispielsweise durch ein Nahbereichsradar, ein lichtoptisches Abstandssensorsystem, ein Videosystem und dergleichen gebildet wird. Wenn von der Sensorik ein voraus fahrendes Fahrzeug auf der eigenen Fahrspur erfaßt wird, so wird erforderlichenfalls die Geschwindigkeit des Fahrzeugs unter die eingestellte Wunschgeschwindigkeit reduziert, so daß das voraus fahrende Fahrzeug mit einem angemessenen Sicherheitsabstand, beispielsweise mit einer wählbaren Zeitlücke von 1 bis 2 Sekunden verfolgt wird. In einem Betriebsmodus, der als ACC (Adaptive Cruise Control) bezeichnet wird, erfolgt die Abstandsregelung ausschließlich anhand der Signale des Fernbereichs-Abstandssensors 20, der einen Ortungsbereich von beispielsweise 10 bis 200 m aufweist. Dieser Betriebsmodus ist für Fahrten auf Autobahnen und gut ausgebauten Landstraßen bei flüssigem Verkehr vorgesehen, also für Verkehrssituationen, in denen generell mit einer relativ hohen Reisegeschwindigkeit gefahren wird. Darüber hinaus weist der Geschwindigkeitsregler 10 einen Regelmodus auf, der als Stop & Roll bezeichnet wird und für Verkehrssituationen mit hoher Verkehrsdichte und entsprechend niedriger Geschwindigkeit vorgesehen ist, beispielsweise für zähflüssigen Verkehr oder Staubetrieb auf Autobahnen oder Landstraßen. In diesem Modus werden auch die Signale der Nahbereichssensorik 22 ausgewertet, so daß kürzere Fahrzeugabstände genauer erfaßt werden können. Während im ACC-Modus nur bewegliche Objekte als relevante Zielobjekte berücksichtigt werden, müssen im Stop & Roll Modus auch Standziele ausgewertet werden, die vom Fernbereichs-Abstandssensor 20 oder von der Nahbereichssensorik 22 erfaßt werden. Zudem weist die Nahbereichssensorik 22 auch einen größeren Ortungs-Winkelbereich auf, so daß auch Objekte erfaßt werden können, die sich im Nahbereich auf den Nebenspuren bzw. am Fahrbahnrand befinden. Hierdurch wird das System in die Lage versetzt, frühzeitig auf plötzlich auftretende Hindernisse, z.B. auf plötzlich von der Nebenspur einscherende Fahrzeuge zu reagieren.

Der Stop & Roll Modus weist mindestens eine Regelfunktion auf, die im ACC-Modus nicht verfügbar ist, insbesondere eine Stop-Funktion, mit der das Fahrzeug bei Annäherung an ein stehendes Hindernis automatisch in den Stand gebremst werden kann.

Die Regelfunktionen in den beiden Betriebsmodi ACC und Stop & Roll sind als solche bekannt und werden deshalb hier nicht näher beschrieben.

Der Geschwindigkeitsregler 10 weist eine Entscheidungseinheit 24 auf, die in Abhängigkeit von der jeweiligen Verkehrssituation und unter Mitwirkung des Fahrers entscheidet, in welchem Betriebsmodus der Geschwindigkeitsregler arbeitet. Die Kriterien für diese Entscheidungen werden später noch näher erläutert werden. Der Geschwindigkeitsregler 24 enthält auch einen oder mehrere integrierte Zeitgeber 26, die im Rahmen der Entscheidungsprozeduren benötigt werden.

Wenn die Entscheidungseinheit 24 den ACC-Modus gewählt hat, wird dies dem Fahrer durch Aufleuchten einer Anzeigelampe 28 auf dem Armaturenbrett angezeigt. Entsprechend zeigt eine Anzeigelampe 30 den Betriebsmodus Stop & Roll an. Zusätzlich ist ein Lautsprecher 32 vorgesehen, mit dem der Fahrer durch ein akustisches Signal auf einen Wechsel des Betriebsmodus aufmerksam gemacht oder auch vor bestimmten Systemzuständen bzw. Verkehrssituationen gewarnt wird.

In Figur 2 sind die Geschwindigkeitsbereiche dargestellt, in denen die Betriebsmodi ACC und Stop & Roll (S&R) aktivierbar sind. Grundsätzlich ist der ACC-Modus aktivierbar, wenn die Ist-Geschwindigkeit V des Fahrzeugs über einer Grenzgeschwindigkeit Vₛ liegt. Der S&R-Modus ist aktiverbar, wenn die Ist-Geschwindigkeit des Fahrzeugs kleiner ist als eine Geschwindigkeit Vₛ + h₁. Der Geschwindigkeitsbereich zwischen Vₛ und Vₛ + h₁ ist somit ein Hysteresebereich, in dem entweder der ACC-Modus oder der S&R-Modus aktiv sein kann. Als Beispiel kann angenommen werden, daß die Grenzgeschwindigkeit Vₛ 30 km/h und das Hysterese-Intervall h₁ 5 km/h beträgt.

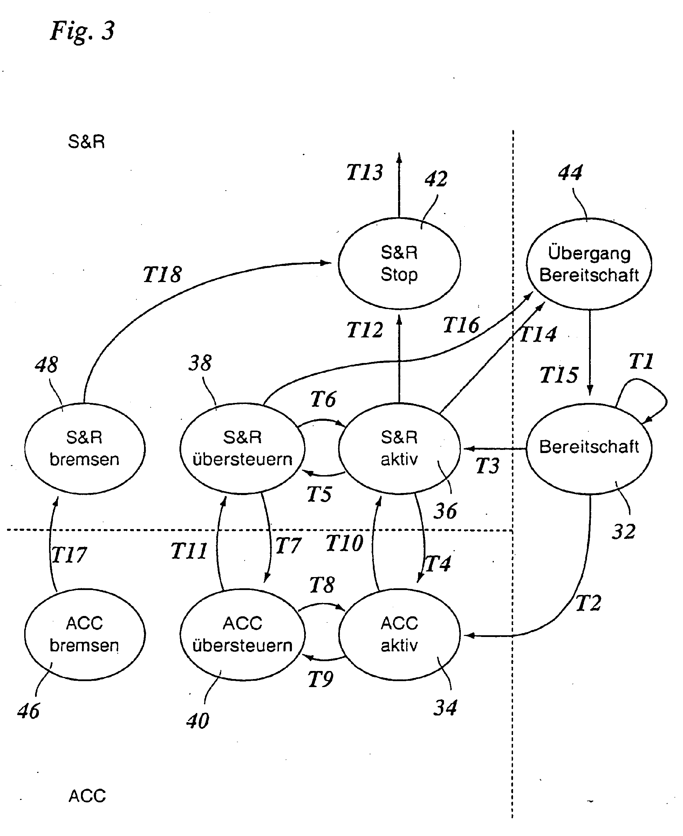

In Figur 3 sind verschiedene Betriebszustände des Geschwindigkeitsreglers sowie die wichtigsten Übergänge zwischen ihnen dargestellt. Die aktiven Betriebszustände gliedern sich in die beiden Haupt-Betriebsmodi ACC und S&R.

In einem Zustand 32 "Bereitschaft" sind die Sensorsysteme und die Auswerte- und Regelalgorithmen des Geschwindigkeitsreglers 10 aktiv, so daß das Verkehrsgeschehen verfolgt werden kann, doch werden keine Stellbefehle an das Antriebs- und Bremssystem des Fahrzeugs ausgegeben, so daß die Kontrolle über das Fahrzeug dem Fahrer überlassen bleibt. Solange der Fahrer nicht aktiv einen Befehl zum Aktivieren des Geschwindigkeitsreglers eingibt, bleibt der Geschwindigkeitsregler im Bereitschaftszustand, wie durch einen Pfeil T1 symbolisiert wird.

Der Fahrer kann den Geschwindigkeitsregler aktivieren, indem er die "+"-Taste 12, die "-"-Taste 14 oder die Resume-Taste 18 betätigt. Die Entscheidungseinheit 24 entscheidet dann anhand der in diesem Augenblick vorliegenden Ist-Geschwindigkeit V, ob der Geschwindigkeitsregler in den Zustand 34 "ACC aktiv" oder in den Zustand 36 "S&R aktiv" übergeht. Wenn die Ist-Geschwindigkeit V größer ist als die Grenzgeschwindigkeit Vₛ, erfolgt bei Betätigung jeder der drei Tasten 12, 14, 18 ein Übergang in den Zustand 34 "ACC aktiv" entsprechend dem Pfeil T2 in Figur 3. Wenn dagegen die Ist-Geschwindigkeit V kleiner oder gleich Vₛ ist, erfolgt ein Übergang in den Zustand 36 "S&R aktiv" gemäß Pfeil T3. In diesem Fall wird die Wunschgeschwindigkeit auf Vₛ eingestellt, sofern die durch Betätigung der Taste 12, 14 und 18 eingestellte Wunschgeschwindigkeit größer war als dieser Wert. Der ACC-Modus läßt sich folglich nur aktivieren, wenn die Geschwindigkeit des Fahrzeugs mindestens 30 km/h beträgt. Andernfalls geht der Regler in den S&R-Modus, und die Fahrzeuggeschwindigkeit wird auf den Bereich von 0 bis 30 km/h begrenzt, also auf den Bereich, in dem eine einwandfreie Funktion des S&R-Modus gewährleistet ist.

Im Zustand 36 hat der Fahrer nun zwei Möglichkeiten, das Fahrzeug über 30 km/h zu beschleunigen und in den ACC-Modus überzugehen. Zum einen kann der Fahrer durch ein- oder mehrmalige Betätigung der "+"-Taste 12 eine höhere Wunschgeschwindigkeit wählen. Sobald die neue Wunschgeschwindigkeit Vₛₑₜ größer ist als Vₛ + h₁ ,im angenommenen Beispiel also mindestens 40 km/h beträgt, veranlaßt die Entscheidungseinheit 24 einen Übergang in den Zustand 34 gemäß Pfeil T4. Alternativ dazu kann der Fahrer im Zustand 36 das Gaspedal betätigen und so die S&R-Regelfunktion übersteuern, so daß der Regler gemäß Pfeil T5 in den Zustand 38 "S&R übersteuern" übergeht. Wenn das Fahrzeug auf die gewünschte Geschwindigkeit beschleunigt wurde und der Fahrer das Gaspedal losläßt, kehrt der Regler gemäß Pfeil T6 in den Zustand 36 "S&R aktiv" zurück. Wenn er dann durch Betätigen der "+"-Taste 12 oder der "-"-Taste 14 eine Wunschgeschwindigkeit Vₛₑₜ wählt, die größer ist als Vₛ + h₁, so gelangt der Regler über den Pfeil T4 in den Zustand 34. Wahlweise kann der Fahrer auch, noch während er das Gaspedal gedrückt hält und sich somit im Zustand 38 befindet, durch Betätigen der "+"-Taste oder der "-"-Taste eine Wunschgeschwindigkeit. Vₛₑₜ wählen, die größer ist als Vₛ + h₁. Sobald dann die Ist-Geschwindigkeit V größer ist als Vₛ + h₁, erfolgt gemäß Pfeil T7 ein Übergang in den Zustand 40 "ACC übersteuern". Läßt der Fahrer nun das Gaspedal los, so erfolgt gemäß Pfeil T8 ein Übergang in den Zustand 34 "ACC aktiv". Die Geschwindigkeit des Fahrzeugs wird dann auf die neu gewählte Wunschgeschwindigkeit Vₛₑₜ geregelt, und auch die Ist-Geschwindigkeit wird über 30 km/h bleiben, da die Geschwindigkeit beim Loslassen des Gaspedals mindestens 35 km/h betragen hat.

Wie aus der obigen Beschreibung hervorgeht, muß der Fahrer mindestens einmal die "+"-Taste 12 oder die "-"-Taste 14 (oder die resume-taste 18) betätigen, um aus dem S&R-Modus (Zustand 36) in den ACC-Modus (Zustand 34) zu gelangen. Dieser Moduswechsel findet folglich nicht ohne aktive Beteiligung des Fahrers und somit nicht gegen den Willen des Fahrers statt.

Natürlich kann der Fahrer auch den Zustand 34 "ACC aktiv" durch Betätigen des Gaspedals übersteuern, so daß er gemäß Pfeil T9 vorübergehend in den Zustand 40 gelangt.

Der Pfeil T10 in Figur 3 beschreibt den regulären Übergang vom ACC-Modus in den S&R-Modus, genauer, den Übergang vom Zustand 34 in den Zustand 36. Dieser Übergang ist möglich, wenn eine der folgenden Bedingungen erfüllt ist:
a) Die Wunschgeschwindigkeit Vₛₑₜ ist kleiner als die Grenzgeschwindigkeit Vₛ, und außerdem ist die Ist-Geschwindigkeit V kleiner als Vₛ + h₁. Dies entspricht der Situation, daß der Fahrer durch Betätigen der "-"-Taste 14 eine niedrige Wunschgeschwindigkeit wählt. Das Fahrzeug wird dann seine Geschwindigkeit verringern, und der Übergang in den S&R-Modus erfolgt, sobald der für diesen Modus vorgesehene Geschwindigkeitsbereich gemäß Figur 2 erreicht ist.
b) Die Ist-Geschwindigkeit V nimmt von einem Wert oberhalb der Grenzgeschwindigkeit Vₛ auf einen Wert unterhalb dieser Grenzgeschwindigkeit ab. Das ist typischerweise der Fall, wenn beim Auffahren auf ein Stauende der Fernbereichs-Abstandssensor 20 ein langsames oder angehaltenes Fahrzeug auf der eigenen Fahrspur erfaßt und dementsprechend die Geschwindigkeit drosselt. Der Übergang in den S & R-Modus erfolgt dann, sobald der für den ACC-Modus zulässige Geschwindigkeitsbereich gemäß Figur 2 verlassen wird. In diesem Fall wird die Wunschgeschwindigkeit Vₛₑₜ automatisch auf Vₛ gesetzt, um sicherzustellen, daß der Geschwindigkeitsregler, wenn sich der Stau aufgelöst hat, nicht von selbst wieder in den ACC-Modus zurückkehrt, sondern nur dann, wenn der Fahrer aktiv die Wunschgeschwindigkeit wieder heraufsetzt, entsprechend einem Übergang gemäß Pfeil T4. Wahlweise kann der Übergang von ACC auf S&R auch erst dann erfolgen, wenn Vₛ für die Dauer eines bestimmten Zeitintervalls unterschritten wird. Dadurch wird eine gewisse Toleranz gegen Rauschen im Geschwindigkeitssignal erreicht.
c) Die Wunschgeschwindigkeit Vₛₑₜ wird durch Fahrerbefehl auf einen Wert erhöht, der größer ist als Vₛ + h₁, und außerdem ist nach Ablauf einer von dem Zeitgeber 26 gemessenen Zeitspanne die Ist-Geschwindigkeit V immer noch kleiner als Vₛ. Dies entspricht der Situation, daß der Fahrer gemäß Pfeil T4 in den ACC-Modus wechseln möchte, die für diesen Modus mindestens erforderliche Grenzgeschwindigkeit Vₛ jedoch nicht innerhalb einer angemessenen Zeitspanne von beispielsweise 5 Sekunden erreicht werden kann, beispielsweise weil sich vor dem Fahrzeug noch ein langsameres voraus fahrendes Fahrzeug befindet. In diesem Fall kehrt der Geschwindigkeitsregler nach Ablauf der genannten Zeitspanne automatisch wieder in den Zustand 36 zurück. Um in den Zustand 34 zu gelangen, muß der Fahrer dann, wenn die Fahrbahn vor ihm frei ist, nochmals einen Befehl zur Erhöhung der Wunschgeschwindigkeit eingeben.

In Ausnahmefällen ist auch ein Übergang aus dem Zustand 40 "ACC übersteuern" in den Zustand 38 "S&R übersteuern" möglich, wie durch den Pfeil T11 angegeben wird. Dieser Übergang findet statt, wenn der Fahrer die Wunschgeschwindigkeit auf einen Wert unterhalb von Vₛ verringert und die Ist-Geschwindigkeit V trotz Betätigung des Gaspedals unter Vₛ absinkt, d.h., wenn der Fahrer zwar die Wunschgeschwindigkeit verringert, aber dann durch Betätigung des Gaspedals dafür sorgt, daß das Fahrzeug langsamer verzögert als der Geschwindigkeitsregler es vorgibt.

Aus dem Zustand 36 "S&R aktiv" ist auch ein Übergang in einen Zustand 42 "S&R Stop" möglich, wie durch den Pfeil T12 symbolisiert wird. Im Zustand 42 bewirkt der Geschwindigkeitsregler 10 das automatische Bremsen des Fahrzeugs in den Stand. Anschließend geht der Geschwindigkeitsregler gemäß Pfeil T13 in einen von mehreren nicht gezeigten Anfahrzuständen über, die festlegen, ob das erneute Anfahren des Fahrzeugs durch den Geschwindigkeitsregler 10 gesteuert wird, wenn die Verkehrsbedingungen dies zulassen oder wenn der Fahrer eine entsprechende Anfahraufforderung bestätigt, oder ob der Anfahrvorgang durch den Fahrer selbst gesteuert wird. Einzelheiten dieser Anfahrprozeduren werden in DE 199 58 520 A1 beschrieben.

Der Übergang in den Zustand 42 gemäß Pfeil T12 findet statt, wenn im Zustand 36 die Geschwindigkeit des Fahrzeugs (maßgeblich ist hier nicht die angezeigte, sondern die tatsächlich gemessene Geschwindigkeit) unter einen Schwellenwert von beispielsweise 2 bis 4 km/h abgenommen hat, z.B. beim Auffahren auf ein stehendes Hindernis. Da diese Funktion "Bremsen in den Stand" nur im S&R-Modus verfügbar ist, wird bei dem hier beschriebenen Geschwindigkeitsregler der Übergang vom S&R-Modus in den ACC-Modus und damit der Verzicht auf diese Funktion nur dann zugelassen, wenn der Fahrer aktiv durch Betätigung einer der Tasten 12, 14 oder 18 einen entsprechenden Befehl eingibt.

In jedem der aktiven Zustände kann der Geschwindigkeitsregler 10 deaktiviert werden, wenn eines von mehreren vordefinierten Ereignissen eintritt. Die wichtigsten dieser Ereignisse sind die Betätigung der OFF-Taste 16 durch den Fahrer und die Betätigung des Bremspedals durch den Fahrer. In Figur 3 ist lediglich die Deaktivierung aus dem Zustand 36 "S&R aktiv" heraus durch einen Pfeil T14 dargestellt. Der Geschwindigkeitsregler durchläuft dann einen Übergangszustand 44, in dem die an das Antriebs- und/oder Bremssystem ausgegebenen Stellbefehle allmählich zurückgefahren werden, so daß ein ruckfreier Übergang und ein entsprechend hoher Fahrkomfort erreicht wird. Aus dem Übergangszustand 44 gelangt der Geschwindigkeitsregler dann gemäß Pfeil T15 wieder in den Zustand 32 "Bereitschaft". Die vor der Deaktivierung geltende Wunschgeschwindigkeit bleibt jedoch gespeichert und wird wieder aufgerufen, wenn der Fahrer im Zustand 32 die Resume-Taste 18 betätigt. Wahlweise kann eine Ausnahme für den Fall vorgesehen sein, daß die gespeicherte Wunschgeschwindigkeit größer ist als die Grenzgeschwindigkeit Vₛ und bei Betätigung der Resume-Taste 18 die Ist-Geschwindigkeit des Fahrzeugs kleiner ist als Vₛ. In diesem Fall erfolgt dann ein Übergang in den S&R-Modus, und die Wunschgeschwindigkeit wird auf Vₛ gesetzt, wie in Verbindung mit dem Pfeil T3 beschrieben wurde. Damit wird der Möglichkeit Rechnung getragen, daß der Fahrer nach einer längeren inaktiven Phase des Geschwindigkeitsreglers vergessen hat, daß er sich zuletzt im ACC-Modus befunden hatte, in dem die Funktion "Bremsen in den Stand" nicht zur Verfügung steht.

Wie in Verbindung mit dem Pfeil T7 beschrieben wurde, erfolgt ein Übergang aus dem Zustand 38 "S&R übersteuern" in den Zustand 40 "ACC übersteuern" nur dann, wenn der Fahrer die bisher im S&R-Modus geltende Wunschgeschwindigkeit erhöht. Falls die Wunschgeschwindigkeit unverändert bleibt und der Fahrer durch Betätigung des Gaspedals beschleunigt, kann es daher vorkommen, daß die Geschwindigkeit größer wird als die für den Stop & Roll Modus zulässige Geschwindigkeit. In diesem Fall wird der Geschwindigkeitsregler zwangsweise deaktiviert, wie durch den Pfeil T16 symbolisiert wird. Im einzelnen erfolgt diese Deaktivierung unter der Bedingung, daß die Wunschgeschwindigkeit Vₛₑₜ kleiner oder gleich Vₛ ist und außerdem die Ist-Geschwindigkeit V größer ist als ein Schwellenwert Vₛ + h₂. Hier ist h₂ ein Hysterese-Parameter, der wahlweise mit h₁ übereinstimmen kann.

Der Vollständigkeit halber sind in Figur 3 noch zwei weitere Zustände 46 "ACC bremsen" und 48 "S&R bremsen" gezeigt, in denen der Geschwindigkeitsregler nur auf das Bremssystem des Fahrzeugs aber nicht auf das Antriebssystem einwirken kann. Diese Zustände werden erreicht, wenn im ACC-Modus (Zustand 34) bzw. im S&R-Modus (Zustand 36) die Parkbremse betätigt ist oder wenn in diesen Modi das elektronische Stabilitätsprogramm (ESP) des Fahrzeugs einen Fahrbahnzustand mit geringem Kraftschluß (z.B.Eisglätte) erkennt. Ein Übergang ist hier nur in der Richtung vom ACC-Modus in den S&R-Modus möglich, also vom Zustand 46 in den Zustand 48 gemäß Pfeil T17, wenn die Ist-Geschwindigkeit V kleiner wird als Vₛ. Aus dem Zustand 48 ist dann gemäß Pfeil T18 wieder ein Bremsen in den Stand möglich.

Während bei dem hier beschriebenen Ausführungsbeispiel davon ausgegangen wurde, daß die Wunschgeschwindigkeit nur in Intervallen von 10 km/h geändert werden kann, ist die Erfindung analog auch bei Geschwindigkeitsreglern anwendbar, bei denen die Wunschgeschwindigkeit stufenlos oder in kleineren Inkrementen, beispielsweise in Intervallen von 1 km/h verändert werden kann.

Die Bedingungen für den Wechsel zwischen den Modi ACC und S&R sind in der nachstehenden Tabelle 1 noch einmal zusammengefaßt.

**Tabelle 1**

| | |
|---|---|
| Aktivierung ACC | |
| T2 | V > Vₛ UND (+, - ODER Resume betätigt) |
| Aktivierung S&R | |
| T3 | V ≤ Vₛ UND (+, - ODER Resume betätigt) (Vₛₑₜ wird begrenzt auf Vₛ) |
| S&R nach ACC | |
| T4 | Vₛₑₜ > Vₛ + h₁ |
| T7 | Vₛₑₜ > Vₛ + h₁ UND V > Vₛ + h₁ |
| ACC nach S&R | |
| T10 | (Vₛₑₜ < Vₛ UND V < Vₛ + h₁) ODER (V nimmt unter Vₛ ab) ODER (Vₛₑₜ > Vₛ + h₁ UND V < Vₛ UND Zeigeber abgelaufen) |
| T11 | Vₛₑₜ < Vₛ UND V < Vₛ |
| Deaktivieren S&R | |
| T16 | Vₛₑₜ ≤ Vₛ UND V > Vₛ + h₂ |

Zur Erläuterung eines zweiten Ausführungsbeispiels des Geschwindigkeitsreglers kann ebenfalls auf Figur 3 Bezug genommen werden, da sich dieses Ausführungsbeispiel von dem zuvor beschriebenen Beispiel im wesentlichen nur dadurch unterscheidet, daß für die Übergänge zwischen den in Figur 3 gezeigten Zuständen andere Bedingungen gelten. Zur Definition dieser Bedingungen werden Parameter benutzt, die in der Entscheidungseinheit 24 gespeichert sind und die wie folgt definiert sind:
Schwellenwert für die Umschaltung zwischen ACC und S&R
   V_{select} = 35 km/h
Maximale Wunschgeschwindigkeit für S&R:
   V_{SRset} = 30 km/h.
Mindestgeschwindigkeit (Grenzgeschweindigkeit) für ACC:
   V_{ACCmin} = 30 km/h
Schwellenwert für Deaktivierung S&R bei Übersteuern
   V_{SRs} = 45 km/h
Maximaler Fahrzeugabstand für Aktivierung S&R:
   d_{SRon} = 30 m
Maximaler Fahrzeugabstand für Deaktivierung S&R:
   d_{SRoff} = 50 m
Wartezeit bei Zielobjektverlust:
   T₁ = 5 s

Die Bedingungen für die Aktivierung und Deaktivierung der Betriebsmodi ACC und S&R und für den Moduswechsel ergeben sich aus der nachstehenden Tabelle 2.

**Tabelle 2**

| | |
|---|---|
| Aktivierung ACC | |
| T2 | V > V_{select} UND (+ ODER - betätigt ODER (Resume betätigt UND Vₛₑₜ₍ₐₗₜ₎ > Vₛ)) |
| Aktivierung S&R | |
| T3 | V ≤ V_{select} UND (+, - ODER Resume betätigt) UND d < d_{SRon} (Vₛₑₜ wird begrenzt auf V_{SRset}) |
| S&R nach ACC | |
| T4 | V > V_{select} UND Vₛₑₜ > V_{select} |
| T7 | V_{SRs} ≥ V > V_{select} UND Vₛₑₜ > V_{select} |
| ACC nach S&R | |
| T10 | V nimmt unter V_{ACCmin} ab |
| Deaktivieren S&R | |
| T14 | t > T₁ ODER d > d_{SRoff} ODER (V > V_{SRs} UND (keine der Tasten +, - ODER Resume betätigt)) |
| T16 | V > V_{SRs} UND (keine der Tasten +, - ODER Resume betätigt) |

Der ACC-Modus wird aktiviert (Pfeil T2), wenn die Ist-Geschwindigkeit V größer ist als die Grenzgeschwindigkeit V_{select} und außerdem der Fahrer die "+"-Taste 12 oder die "-"-Taste betätigt. Die Betätigung der Resume-Taste 18, mit der die zuletzt gespeicherte Wunschgeschwindigkeit wiederhergestellt wird, bewirkt nur dann die Aktivierung des ACC-Modus, wenn die zuletzt gespeicherte Wunschgeschwindigkeit Vₛₑₜ₍ₐₗₜ₎ über V_{select} liegt.

Der Modus S&R wird aktiviert (Pfeil T3), wenn die Ist-Geschwindigkeit V höchstens gleich V_{select} ist und der Fahrer eine der Tasten 12, 14 oder 18 betätigt. Darüber hinaus muß bei diesem Ausführungsbeispiel jedoch noch die Bedingung erfüllt sein, daß die Sensorik ein Zielobjekt erfaßt hat und der Abstand des Zielobjekts höchstens gleich d_{SRon} ist, also höchstens 30 m beträgt. Der Stop & Roll Modus läßt sich folglich nur aktivieren, wenn ein Zielobjekt, beispielsweise ein voraus fahrendes Fahrzeug, in nicht zu großem Abstand vorhanden ist, so daß die Aktionen des Geschwindigkeitsreglers von dem Verhalten des voraus fahrenden Fahrzeugs bestimmt werden. Hierdurch wird die Gefahr vermieden, daß es zu Fehlreaktionen kommt, wenn ein relevantes Zielobjekt nicht von der Abstandssensorik erkannt worden ist.

Bei Aktivierung des S&R Modus wird die Wunschgeschwindigkeit Vₛₑₜ bei diesem Beispiel auf die Geschwindigkeit V_{SRset} begrenzt (30 km/h).

Ein Wechsel aus dem Zustand 36 "S&R aktiv" in den Zustand 34 "ACC aktiv" gemäß Pfeil T4 findet bei diesem Ausführungsbeispiel statt, wenn die Ist-Geschwindigkeit V größer ist als V_{select} und außerdem durch Betätigung einer der Tasten 12, 14, 18 eine Wunschgeschwindigkeit gewählt wird, die größer ist als V_{select}.

Aus dem Zustand 38 "S&R übersteuern" in den Zustand 40 "ACC übersteuern" (Pfeil T7) findet nur dann statt, wenn die Ist-Geschwindigkeit V größer ist als V_{select} (35km/h) aber kleiner als der Schwellenwert V_{SRs} (45 km/h) und außerdem die Wunschgeschwindigkeit durch Betätigen einer der Tasten 12, 14, 18 auf einen größeren Wert als V_{select} eingestellt wird. Um durch Betätigen des Gaspedals in den ACC-Modus zu gelangen, muß der Fahrer folglich eine der Tasten 12, 14, 18 betätigen, während die Geschwindigkeit in dem Intervall zwischen 35 und 45 km/h liegt. Hierdurch soll dem Fahrer bewußt gemacht werden, daß er nun den S&R Modus verläßt, in dem die Funktion "Bremsen in den Stand" verfügbar ist. Wenn es der Fahrer versäumt oder absichtlich unterläßt, in diesem Geschwindigkeitsintervall eine der Tasten zu betätigen, so hängt das Verhalten der Entscheidungseinheit 24 von der Ist-Geschwindigkeit V ab. Wenn diese kleiner bleibt als 45 km/h, bis der Fahrer das Gaspedal losläßt, kehrt das System in den Zustand 36 zurück (Pfeil T6). Andernfalls wird der Geschwindigkeitsregler deaktiviert (Pfeil T16).

Der Übergang vom Zustand 34 "ACC aktiv" in den Zustand 36 "S&R aktiv" erfolgt automatisch, sobald die Ist-Geschwindigkeit V unter die Mindestgeschwindigkeit V_{ACCmin} für den ACC-Modus abnimmt (Pfeil T10).

Ein Übergang aus dem Zustand 40 "ACC übersteuern" in den Zustand 38 "S&R Übersteuern", entsprechend dem Pfeil T11 bei dem vorherigen Ausführungsbeispiel, ist in dieser Ausführungsform nicht vorgesehen. Wenn die Geschwindigkeit des Fahrzeugs unter die Mindestgeschwindigkeit für ACC absinkt, obwohl der Fahrer das Gaspedal betätigt, beispielsweise bei steiler Bergfahrt, und der Fahrer dann das Gaspedal losläßt, erfolgt der Übergang in den Zustand 36 "S&R aktiv" über den Zustand 34 (Pfeile T8 und T10). Wenn der Fahrer dagegen wieder beschleunigt, so daß die Geschwindigkeit wieder über V_{ACCmin} ansteigt, bevor der Fahrer das Gaspedal losläßt, bleibt das System im ACC-Modus. Dies wird im allgemeinen auch der Erwartung des Fahrers entsprechen.

Wenn sich der Geschwindigkeitsregler im Zustand 36 "S&R aktiv" befindet, erfolgt eine Deaktivierung gemäß Pfeil T14 bei dieser Ausführungsform nicht nur durch Betätigung der Off-Taste 16, sondern auch automatisch, wenn eine der folgenden Bedingungen erfüllt ist:
a) Das bisher verfolgte Zielobjekt geht verloren und wird auch nicht wiedergefunden, bevor die vom Zeitgeber 26 gezählte Zeit t den Wert T₁ (5 s) erreicht.
b) Der Abstand d des vorausfahrenden Fahrzeugs wird größer als der Parameter d_{SRoff} (50 m)
c) Die Ist-Geschwindigkeit wird größer als der Schwellenwert V_{SRs} (45 km/h), beispielsweise bei steiler Talfahrt, und der Fahrer betätigt keine der Tasten 12, 14 oder 18.

Durch die Überprüfung dieser Bedingungen wird sichergestellt, daß der S&R Modus nur dann aktiv ist, wenn der Geschwindigkeitsregler die in diesem Modus vorgesehenen Funktionen auch sicher erfüllen kann.

## Patentansprüche

1. Geschwindigkeitsregler für Kraftfahrzeuge, mit einer Eingabeeinrichtung (12, 14, 18) zur Eingabe einer Wunschgeschwindigkeit (Vₛₑₜ) durch den Fahrer, und mit mehreren Betriebsmodi (ACC, S&R), die in unterschiedlichen Geschwindigkeitsbereichen aktivierbar sind und sich in ihrem Funktionsumfang unterscheiden, wobei ein Wechsel des Betriebsmodus, der den Verlust einer sicherheitsrelevanten Funktion zur Folge hat, nur duch Fahrerbefehl möglich ist, **gekennzeichnet durch** eine Entscheidungseinheit (24), die anhand vorgegebener Kriterien entscheidet, ob eine vom Fahrer über die Eingabeeinrichtung (12, 14, 18) eingegebene Änderung der Wunschgeschwindigkeit (Vₛₑₜ) als Befehl zur Änderung des Betriebsmodus zu interpretieren ist, wobei eines der vorgegebenen Kriterien darin besteht, daß der Fahrer aktiv eine Wunschgeschwindigkeit wählt, die außerhalb des Geschwindigkeitsbereichtes liegt, der für den Betriebsmodus zugelassen ist, in dem sich der Geschwindigkeitsregler aktuell befindet.

2. Geschwindigkeitsregler nach Anspruch 1, **gekennzeichnet durch** eine Anzeigeeinrichtung (28, 30) zur Anzeige des Betriebsmodus.

3. Geschwindigkeitsregler nach Anspruch 1 oder 2, **gekennzeichnet durch** eine Signaleinrichtung (32), die dem Fahrer einen Wechsel des Betriebsmodus signalisiert.

4. Geschwindigkeitsregler nach einem der vorstehenden Ansprüche, **dadurch gekennzeichnet, daß** einer der Betriebsmodi (ACC) ein nur oberhalb einer Grenzgeschwindigkeit (Vₛ; V_{ACCmin}) aktivierbarer Betriebsmodus für höhere Fahrzeuggeschwindigkeiten ist und ein anderer Betriebsmodus (S&R) ein Betriebsmodus für kleinere Fahrzeuggeschwindigkeiten ist, der eine Funktion zum automatische Bremsen des Fahrzeugs in den Stand aufweist und in einem Geschwindigkeitsbereich aktivierbar ist, dessen obere Grenze mindestens gleich der Grenzgeschwindigkeit (Vₛ; V_{ACCmin}) ist.

5. Geschwindigkeitsregler nach Anspruch 4, **dadurch gekennzeichnet, daß** die Entscheidungseinheit (24) einen Wechsel von dem Modus (ACC) für höhere Geschwindigkeiten in den Modus (S&R) für kleinere Geschwindigkeiten automatisch veranlaßt, wenn die Geschwindigkeit des Fahrzeugs unter die Grenzgeschwindigkeit (Vₛ; V_{ACCmin}) abnimmt, und dann die Wunschgeschwindigkeit (Vₛₑₜ) automatisch auf einen für den neuen Modus zulässigen Wert (Vₛ; V_{SRset}) begrenzt.

6. Geschwindigkeitsregler nach Anspruch 4 oder 5, **dadurch gekennzeichnet, daß** die Entscheidungseinheit (24) einen Wechsel von dem Modus (ACC) für höhere Geschwindigkeit in den Modus (S&R) für kleinere Geschwindigkeit automatisch veranlaßt, wenn die Wunschgeschwindigkeit (Vₛₑₜ) kleiner ist als die Grenzgeschwindigkeit V_{S} und außerdem die Ist-Geschwindigkeit (V) des Fahrzeugs kleiner ist als V_{S} + h₁, wobei h₁ ein nicht negativer Wert ist.

7. Geschwindigkeitsregler nach einem der Ansprüche 4 bis 6, **dadurch gekennzeichnet, daß** die Entscheidungseinheit (24) den Wechsel aus dem Modus (ACC) für höhere Geschwindigkeiten in den Modus (S&R) für kleinere Geschwindigkeiten automatisch veranlaßt, wenn die Wunschgeschwindigkeit (Vₛₑₜ) auf einen Schwellenwert vergrößert wird, der mindestens gleich der Grenzgeschwindigkeit (V_{S}) ist, und wenn dann die Ist-Geschwindigkeit (V) des Fahrzeugs innerhalb eines vorgegebenen Zeitintervalls nicht mindestens auf die Grenzgeschwindigkeit zunimmt.

8. Geschwindigkeitsregler nach einem der Ansprüche 4 bis 7, **dadurch gekennzeichnet, daß** die Entscheidungseinheit (24) den Wechsel von dem Betriebsmodus (S&R) für kleinere Geschwindigkeiten in den Betriebsmodus (ACC) für größere Geschwindigkeiten veranlaßt, wenn die Wunschgeschwindigkeit vom Fahrer auf einen Wert erhöht wird, der größer ist V_{S} + h₁, wobei V_{S} die Grenzgeschwindigkeit und h₁ ein nicht negativer Wert ist.

9. Geschwindigkeitsregler nach einem der Ansprüche 4 bis 8, **dadurch gekennzeichnet, daß** die Entscheidungseinheit (24) den Geschwindigkeitsregler deaktiviert, wenn im Betriebsmodus (S&R) für kleinere Geschwindigkeiten die Wunschgeschwindigkeit (Vₛₑₜ) kleiner oder gleich der Grenzgeschwindigkeit (V_{S}) ist und die Ist-Geschwindigkeit (V) größer als ein Schwellenwert (V_{S} + h₂) ist, der seinerseits größer ist als die Grenzgeschwindigkeit (V_{S}).

10. Geschwindigkeitsregler nach Anspruch 5, **dadurch gekennzeichnet, daß** die Entscheidungseinheit (24) den Geschwindigkeitsregler deaktiviert, wenn im Betriebsmodus (S&R) für kleinere Geschwindigkeiten die Geschwindigkeit des Fahrzeugs zunimmt und der Fahrer keine neue Wunschgeschwindigkeit eingibt, während die Ist-Geschwindigkeit des Fahrzeugs innerhalb eines vorgegebenen Geschwindigkeitsbereiches liegt.

11. Geschwindigkeitsregler nach einem der Ansprüche 4 bis 10, **dadurch gekennzeichnet, daß** die Entscheidungseinheit (24) den Geschwindigkeitsregler im Modus (ACC) für größere Geschwindigkeiten aktiviert, wenn bei der Eingabe der Wunschgeschwindigkeit die Ist-Geschwindigkeit des Fahrzeugs größer ist als eine vorgegene Grenzgeschwindigkeit (V_{S}, V_{select}), und daß die Entscheidungseinheit (24) den Geschwindigkeitsregler im Modus (S&R) für kleinere Geschwindigkeiten aktiviert und die Wunschgeschwindigkeit begrenzt, wenn bei der Eingabe der Wunschgeschwindigkeit die Ist-Geschwindigkeit (V) des Fahrzeugs kleiner oder gleich der vorgegebenen Grenzgeschwindigkeit (V_{S}, V_{select}) ist.

12. Geschwindigkeitsregler nach Anspruch 11, **dadurch gekennzeichnet, daß** die Entscheidungseinheit (24) den Geschwindigkeitsregler nur dann im Modus (S&R) für kleinere Geschwindigkeiten aktiviert, wenn außerdem von einem Abstandssensorsystem (20, 22) ein Zielobjekt geortet wird und der Abstand zu diesem Zielobjekt innerhalb eines vorgegebenen Bereiches liegt.

13. Geschwindigkeitsregler nach Anspruch 12, **dadurch gekennzeichnet, daß** die Entscheidungseinheit (24) den Geschwindigkeitsregler im Modus (S&R) für kleinere Geschwindigkeiten automatisch deaktiviert, wenn das Zielobjekt verloren geht und innerhalb einer vorgegebenen Zeitspanne (T_{I}) nicht wiedergefunden wird.

14. Geschwindigkeitsregler nach Anspruch 12 oder 13, **dadurch gekennzeichnet, daß** die Entscheidungseinheit (24) den Geschwindigkeitsregler im Modus (S&R) für kleinere Geschwindigkeiten automatisch deaktiviert, wenn der Abstand des Zielobjektes größer wird als einvorgegebener Wert (d_{SRoff}).

## Claims

1. Cruise controller for motor vehicles, having an input device (12, 14, 18) for the inputting of a desired speed (Vₛₑₜ) by the driver, and having a plurality of operating modes (ACC, S&R) which can be activated in different speed ranges and which differ in their functional scope, wherein a changeover of the operating mode which results in the loss of a function which is relevant for safety is possible only by means of a driver's command, **characterized by** a decision unit (24) which decides, on the basis of predefined criteria, whether a change in the desired speed (Vₛₑₜ) which has been input by the driver by means of the input device (12, 14, 18) can be interpreted as a command for changing the operating mode, wherein one of the predefined criteria consists in the driver actively selecting a desired speed which is outside the speed range which is permitted for the current operating mode of the cruise controller.

2. Cruise controller according to Claim 1, **characterized by** a display device (28, 30) for displaying the operating mode.

3. Cruise controller according to Claim 1 or 2, **characterized by** a signal device (32) which signals a changeover of the operating mode to the driver.

4. Cruise controller according to one of the preceding claims, **characterized in that** one of the operating modes (ACC) is an operating mode for relatively high vehicle speeds which can only be activated above a limiting speed (V_{S}; V_{ACCmin}), and another operating mode (S&R) is an operating mode for relatively low vehicle speeds, which operating mode has a function for automatically braking the vehicle to a stationary state and can be activated in a speed range whose upper limit is at least equal to the limiting speed (V_{S}; V_{ACCmin}).

5. Cruise controller according to Claim 4, **characterized in that** the decision unit (24) automatically brings about a changeover from the mode (ACC) for relatively high speeds into the mode (S&R) for relatively low speeds if the speed of the vehicle decreases below the limiting speed (V_{S}; V_{ACCmin}), and then limits the desired speed (Vₛₑₜ) automatically to a value (V_{S}; U_{SRset}) which is permissible for the new mode.

6. Cruise controller according to Claim 4 or 5, **characterized in that** the decision unit (24) automatically brings about a changeover from the mode (ACC) for relatively high speed into the mode (S&R) for relatively low speed if the desired speed (Vₛₑₜ) is lower than the limiting speed (V_{S}) and also the actual speed (V) of the vehicle is lower than V_{S} + h₁, where h₁ is a non-negative value.

7. Cruise controller according to one of Claims 4 to 6, **characterized in that** the decision unit (24) automatically brings about the changeover from the mode (ACC) for relatively high speeds into the mode (S&R) for relatively low speeds if the desired speed (Vₛₑₜ) is increased to a threshold value which is at least equal to the limiting speed (Vₛ), and when the actual speed (V) of the vehicle then does not increase at least to the limiting speed within a predefined time interval.

8. Cruise controller according to one of Claims 4 to 7, **characterized in that** the decision unit (24) brings about the changeover from the operating mode (S&R) for relatively low speeds into the operating mode (ACC) for relatively high speeds if the desired speed is increased by the driver to a value which is higher than Vₛ + h₁, where Vₛ is the limiting speed and h₁ is a non-negative value.

9. Cruise controller according to one of Claims 4 to 8, **characterized in that** the decision unit (24) deactivates the cruise controller if in the operating mode (S&R) for relatively low speeds the desired speed (Vₛₑₜ) is lower than or equal to the limiting speed (Vₛ), and the actual speed (V) is higher than a threshold value (Vₛ + h₂) which is itself higher than the limiting speed (Vₛ).

10. Cruise controller according to Claim 5, **characterized in that** the decision unit (24) deactivates the cruise controller if in the operating mode (S&R) for relatively low speeds the speed of the vehicle increases and the driver does not input a new desired speed while the actual speed of the vehicle is within a predefined speed range.

11. Cruise controller according to one of Claims 4 to 10, **characterized in that** the decision unit (24) activates the cruise controller in the mode (ACC) for relatively high speeds if, during the inputting of the desired speed, the actual speed of the vehicle is higher than a predefined limiting speed (Vₛ, V_{select}), and **in that** the decision unit (24) activates the cruise controller in the mode (S&R) for relatively low speeds and limits the desired speed if during the inputting of the desired speed the actual speed (V) of the vehicle is lower than or equal to the predefined limiting speed (Vₛ, V_{select}).

12. Cruise controller according to Claim 11, **characterized in that** the decision unit (24) activates the cruise controller in the mode (S&R) for relatively low speeds only if the location of a target object is also determined by a distance sensor system (20, 22) and the distance from this target object is within a predefined range.

13. Cruise controller according to Claim 12, **characterized in that** the decision unit (24) automatically deactivates the cruise controller in the mode (S&R) for relatively low speeds if the target object is lost and is not found again within a predefined time period (T₁).

14. Cruise controller according to Claim 12 or 13, **characterized in that** the decision unit (24) automatically deactivates the cruise controller in the mode (S&R) for relatively low speeds if the distance from the target object becomes greater than a predefined value (d_{SRoff}).

## Revendications

1. Régulateur de vitesse pour véhicules automobiles, qui présente un dispositif d'introduction (12, 14, 18) qui permet au conducteur d'introduire une vitesse souhaitée (Vₛₑₜ) et plusieurs modes de fonctionnement (ACC, S&R) qui peuvent être activés dans différentes plages de vitesses et qui diffèrent par l'étendue de leur fonctionnement, une modification du mode de fonctionnement qui a pour conséquence la perte d'une fonction intervenant dans la sécurité n'étant possible que sur commande du conducteur,
**caractérisé par**
une unité de décision (24) qui, à partir de critères prédéterminés, décide si une modification de la vitesse souhaitée (Vₛₑₜ) introduite par le conducteur à l'aide du dispositif d'introduction (12, 14, 18) doit être interprétée comme un ordre de modification du mode de fonctionnement et
en ce qu'un des critères prédéterminés est que le conducteur sélectionne activement une vitesse souhaitée située à l'extérieur de la plage de vitesse admissible pour le mode de fonctionnement dans lequel le régulateur de vitesse se trouve à cet instant.

2. Régulateur de vitesse selon la revendication 1, **caractérisé par** un dispositif d'affichage (28, 30) qui affiche le mode de fonctionnement.

3. Régulateur de vitesse selon les revendications 1 ou 2, **caractérisé par** un dispositif de signalisation (32) qui signale au conducteur un changement de mode de fonctionnement.

4. Régulateur de vitesse selon l'une des revendications précédentes, **caractérisé en ce que** l'un des modes de fonctionnement (ACC) est un mode de fonctionnement qui ne peut être activé qu'au-dessus d'une vitesse limite (Vₛ; V_{ACCmin}) pour des vitesses plus élevées du véhicule et un autre mode de fonctionnement (S&R) est un mode de fonctionnement des basses vitesses du véhicule, qui présente une fonction de freinage automatique du véhicule à l'arrêt et qui peut être activé dans une plage de vitesse dont la limite supérieure est au moins égale à la vitesse limite (Vₛ; V_{ACCmin}).

5. Régulateur de vitesse selon la revendication 4, **caractérisé en ce que** l'unité de décision (24) permet automatiquement un passage du mode (ACC) des hautes vitesses au mode (S&R) des basses vitesses lorsque la vitesse du véhicule est descendue en dessous de la vitesse limite (Vₛ; V_{ACCmin}), la vitesse souhaitée (Vₛₑₜ) limitant automatiquement une valeur (Vₛ; V_{SRset}) admissible dans le nouveau mode.

6. Régulateur de vitesse selon les revendications 4 ou 5, **caractérisé en ce que** l'unité de décision (24) permet un passage automatique du mode (ACC) des hautes vitesses au mode (S&R) des basses vitesses lorsque la vitesse souhaitée (Vₛₑₜ) est inférieure à la vitesse limite Vₛ et lorsqu'en outre la vitesse effective (V) du véhicule est inférieure à Vₛ + h₁, dans laquelle h₁ est une valeur non négative.

7. Régulateur de vitesse selon l'une des revendications 4 à 6, **caractérisé en ce que** l'unité de décision (24) permet le passage automatique du mode (ACC) des hautes vitesses au mode (S&R) des basses vitesses lorsque la vitesse souhaitée (Vₛₑₜ) est augmentée jusqu'à une valeur de seuil au moins égale à la vitesse limite (Vₛ), et si c'est le cas, lorsque la vitesse effective (V) du véhicule n'a pas augmenté au moins jusqu'à la vitesse limite à l'intérieur d'un intervalle de temps prédéterminé.

8. Régulateur de vitesse selon l'une des revendications 4 à 7, **caractérisé en ce que** l'unité de décision (24) permet le passage du mode de fonctionnement (S&R) des basses vitesses au mode de fonctionnement (ACC) des hautes vitesses lorsque la vitesse souhaitée par le conducteur est augmentée à une valeur supérieure à Vₛ + h₁, où Vₛ représente la vitesse limite et h₂ une valeur non négative.

9. Régulateur de vitesse selon l'une des revendications 4 à 8, **caractérisé en ce que** l'unité de décision (24) désactive le régulateur de vitesse si dans le mode de fonctionnement (S&R) des basses vitesses, la vitesse souhaitée (Vₛₑₜ) est inférieure ou égale à la vitesse limite (Vₛ) et si la vitesse effective (V) est supérieure à une valeur de seuil (Vₛ + h₂) qui elle-même est supérieure à la vitesse limite (Vₛ).

10. Régulateur de vitesse selon la revendication 5, **caractérisé en ce que** l'unité de décision (24) désactive le régulateur de vitesse si en mode de fonctionnement (S&R) des basses vitesses, la vitesse du véhicule augmente et si le conducteur n'introduit pas de nouvelle vitesse souhaitée pendant que la vitesse effective du véhicule reste à l'intérieur d'une plage de vitesse prédéterminée.

11. Régulateur de vitesse selon l'une des revendications 4 à 10, **caractérisé en ce que** l'unité de décision (24) active le régulateur de vitesse en mode (ACC) des hautes vitesses si, lors de l'introduction de la vitesse souhaitée, la vitesse effective du véhicule est supérieure à une vitesse de seuil (Vₛ, V_{select}) prédéterminée et **en ce que** l'unité de décision (24) active le régulateur de vitesse en mode (S&R) des basses vitesses et limite la vitesse souhaitée si, lors de l'introduction de la vitesse souhaitée, la vitesse effective (V) du véhicule est inférieure ou égale à la vitesse limite (Vₛ, V_{select}) prédéterminée.

12. Régulateur de vitesse selon la revendication 11, **caractérisé en ce que** l'unité de décision (24) n'active le régulateur de vitesse en mode (S&R) des basses vitesses que si un objet cible a en outre été localisé par un système (20, 22) de détection de distance et que la distance par rapport à cet objet cible est située à l'intérieur d'une plage prédéterminée.

13. Régulateur de vitesse selon la revendication 12, **caractérisé en ce que** l'unité de décision (24) désactive automatiquement le régulateur de vitesse en mode (S&R) des basses vitesses si l'objet cible est perdu et n'est pas retrouvé à l'intérieur d'un intervalle de temps (Tₗ) prédéterminé.

14. Régulateur de vitesse selon les revendications 12 ou 13, **caractérisé en ce que** l'unité de décision (24) désactive automatiquement le régulateur de vitesse en mode (S&R) des basses vitesses si la distance par rapport à l'objet cible est supérieure à une valeur prédéterminée (d_{SRoff}).
